# EUROPÄISCHE PATENTANMELDUNG

(11) **EP 3 081 923 A1**
(43) Veröffentlichungstag der Anmeldung: **19.10.2016**
(21) Anmeldenummer: 15163784.0
(22) Anmeldetag: 16.04.2015
(51) Int. Cl.: G01N 21/359, C07C 51/00

(54) **VERFAHREN ZUR HERSTELLUNG UND REINIGUNG VON ADIPINSÄURE**

(71) Anmelder: BASF SE, 67056 Ludwigshafen am Rhein (DE)
(72) Erfinder: MENKE, Olaf, 67227 Frankenthal (DE); RUSLIM, Franky, 68163 Mannheim (DE); KUESSEL, Uwe, 68163 Mannheim (DE); STEIDEL, Guenter, 67454 Hassloch (DE); SCHWABE, Gabriele, 67227 Frankenthal (DE); FERSTL, Wolfgang, 76135 Karlsruhe (DE); KOKARAKIS, Nektarios, 67549 Worms (DE)
(74) Vertreter: Baier, Martin

(57) **Zusammenfassung**

Die vorliegende Erfindung betrifft ein Verfahren zur Bestimmung der Konzentration von Adipinsäure in einem Stoffgemisch (SG), das Adipinsäure, Glutarsäure und Bernsteinsäure enthält. Die Bestimmung der Konzentration der Adipinsäure erfolgt NIR-spektroskopisch.

## Beschreibung

Die vorliegende Erfindung betrifft ein Verfahren zur Bestimmung der Konzentration von Adipinsäure in einem Stoffgemisch (SG), das Adipinsäure, Glutarsäure und Bernsteinsäure enthält. Die Bestimmung der Konzentration der Adipinsäure erfolgt NIR-spektroskopisch.

Adipinsäure ist die, gemessen an der Jahresproduktion, bedeutsamste Dicarbonsäure. Zur Herstellung von Adipinsäure sind verschiedene Verfahren beschrieben. In neuerer Zeit hat die Herstellung von Adipinsäure aus Adipinsäure-Vorstufen Bedeutung erlangt, die ausgehend von nachwachsenden Rohstoffen wie Zucker gewonnen werden können.

So kann Adipinsäure beispielsweise durch Hydrierung von Muconsäure (2,4-Hexadiendicarbonsäure) gewonnen werden oder durch Desoxygenierung von Glucarsäure.

Großtechnisch wird Adipinsäure in zwei Reaktionsschritten, ausgehend von Cyclohexan, gewonnen. In einem ersten Schritt wird Cyclohexan mit Luft zu einem Cyclohexanol/Cyclohexanon-Gemisch (Anolon-Gemisch) oxidiert. Nach Abtrennung von nicht-umgesetztem Cyclohexan wird das Anolon-Gemisch in einem zweiten Schritt mit konzentrierter Salpetersäure oxidiert unter Erhalt von Adipinsäure. Ebenso ist es möglich, das Anolon-Gemisch zur Herstellung von Adipinsäure mit Luft zu oxidieren.

Die Herstellung von Adipinsäure durch Oxidation eines Anolon-Gemischs mit Salpetersäure ist zum Beispiel in Ullmanns Encyclopedia of Industrial Chemistry 6. Auflage, Band 1, Seiten 453 bis 463 (2003), Wiley-VCH*,* beschrieben. Üblicherweise wird zunächst das Anolon-Gemisch mit der Salpetersäure in einem ersten Reaktor umgesetzt. Bei diesem Verfahren bilden sich neben Adipinsäure weitere Dicarbonsäuren, insbesondere Bernsteinsäure (1,4-Butandisäure) und Glutarsäure (1,5-Pentandisäure). Das Stoffgemisch, welches neben Adipinsäure weitere Dicarbonsäuren enthält, wird dann in einer ersten Trenneinheit von gebildeten Stickoxiden befreit und anschließend in einer zweiten Trenneinheit teilweise entwässert. Von der zweiten Trenneinheit wird das Stoffgemisch in einen Kristallisator überführt, in dem Adipinsäure auskristallisiert wird. Um eine hohe Wirtschaftlichkeit des Verfahrens zu gewährleisten, wird ein Teil des erhaltenen Stoffgemischs zu dem ersten Reaktor, in dem das Anolon-Gemisch mit Salpetersäure umgesetzt wird, rückgeführt. Zur optimalen Steuerung der Menge an Stoffgemisch, die in den ersten Reaktor rückgeführt wird, und um die Menge an eingesetztem Anolon-Gemisch zu steuern, ist es notwendig, die Zusammensetzung des Stoffgemischs zu kennen. Bislang wird die Zusammensetzung des Stoffgemischs durch aufwändige Nass-chemische Analyseverfahren ermittelt. Beispielsweise erfolgt die Bestimmung der Dicarbonsäuren üblicherweise chromatographisch mittels HPLC, die Bestimmung der Salpetersäure mittels Titration.

Der vorliegenden Erfindung liegt somit die Aufgabe zugrunde, ein Verfahren zur Bestimmung der Konzentration von Adipinsäure bereitzustellen, das die vorstehend beschriebenen Nachteile nicht oder nur in vermindertem Maße aufweist. Insbesondere soll die Bestimmung der Zusammensetzung des Stoffgemischs auf einfachem Wege erfolgen.

Gelöst wird diese Aufgabe durch ein Verfahren zur Bestimmung der Konzentration von Adipinsäure in einem Stoffgemisch (SG), das Adipinsäure, Glutarsäure und Bernsteinsäure enthält, wobei die Bestimmung der Konzentration der Adipinsäure NIR-spektroskopisch erfolgt.

Es wurde überraschend gefunden, dass mit dem erfindungsgemäßen Verfahren die Bestimmung der Konzentration von Adipinsäure neben Glutarsäure und Bernsteinsäure in dem Stoffgemisch (SG) möglich ist, obwohl sich die drei Dicarbonsäuren, Adipinsäure, Glutarsäure und Bernsteinsäure, lediglich durch die Zahl der Kohlenstoffatome unterscheiden.

Da in einer bevorzugten Ausführungsform der vorliegenden Erfindung die Bestimmung der Konzentration *"online"* erfolgt, ist das erfindungsgemäße Verfahren besonders schnell und kostengünstig durchführbar, da keine Probenentnahme aus einem Prozessstrom nötig ist. Da keine Probenentnahme notwendig ist, ist das erfindungsgemäße Verfahren zudem besonders sicher. Arbeiter kommen durch das erfindungsgemäße Verfahren nicht in direkten Kontakt mit dem Stoffgemisch (SG). Zudem ist das erfindungsgemäße Verfahren sehr gut automatisierbar, was ebenfalls die Wirtschaftlichkeit des erfindungsgemäßen Verfahrens erhöht.

Auch wenn die Bestimmung der Konzentration der Adipinsäure *"offline"* erfolgt, ist die Bestimmung mittels NIR deutlich schneller als die üblichen nasschemischen Bestimmungsverfahren.

Anhand der bestimmten Konzentration von Adipinsäure sowie gegebenenfalls Glutarsäure und Bernsteinsäure in dem Stoffgemisch (SG) können außerdem sämtliche Eduktströme in einem Verfahren zur Herstellung von Adipinsäure gesteuert oder geregelt werden. Auch dies erhöht die Wirtschaftlichkeit des vorliegenden Verfahrens.

Da in einer erfindungsgemäßen Ausführungsform ein NIR-Spektrometer als Messinstrument (M) eingesetzt wird und NIR-Spektrometer als solche bekannt sind, werden im erfindungsgemäßen Verfahren keine zusätzlichen komplexen Messinstrumente benötigt, was das erfindungsgemäße Verfahren ebenfalls äußerst kostengünstig macht.

Nachfolgend wird das erfindungsgemäße Verfahren näher beschrieben.

Erfindungsgemäß enthält das Stoffgemisch (SG) Adipinsäure, Glutarsäure und Bernsteinsäure. Darüber hinaus kann das Stoffgemisch (SG) noch weitere Stoffe enthalten. Derartige Stoffe sind beispielsweise Wasser, Salpetersäure, Stickoxide sowie weitere Mono- und Dicarbonsäuren.

Bevorzugt enthält das Stoffgemisch (SG) Adipinsäure, Glutarsäure, Bernsteinsäure, Wasser und Salpetersäure.

Das Stoffgemisch (SG) kann Adipinsäure, Glutarsäure und Bernsteinsäure in beliebigen Mengen enthalten.

Beispielsweise enthält das Stoffgemisch (SG) im Bereich von 5 bis 30 Gew.-%, bevorzugt im Bereich von 10 bis 25 Gew.-% und insbesondere bevorzugt im Bereich von 14 bis 19 Gew.-% Adipinsäure, bezogen auf die Summe der Gew.-% von Adipinsäure, Glutarsäure, Bernsteinsäure, Wasser und Salpetersäure, bevorzugt bezogen auf das Gesamtgewicht des Stoffgemischs (SG).

Das Stoffgemisch (SG) enthält außerdem üblicherweise im Bereich von 1 bis 20 Gew.-%, bevorzugt im Bereich von 2 bis 15 Gew.-% und insbesondere bevorzugt im Bereich von 4 bis 12 Gew.-% Glutarsäure, bezogen auf die Summe der Gew.-% von Adipinsäure, Glutarsäure, Bernsteinsäure, Wasser und Salpetersäure, bevorzugt bezogen auf das Gesamtgewicht des Stoffgemischs (SG).

Des Weiteren enthält das Stoffgemisch (SG) üblicherweise im Bereich von 1 bis 15 Gew.-%, bevorzugt im Bereich von 1 bis 12 Gew.-% und insbesondere bevorzugt im Bereich von 2 bis 8 Gew.-% Bernsteinsäure, bezogen auf die Summe der Gew.-% von Adipinsäure, Glutarsäure, Bernsteinsäure, Wasser und Salpetersäure, bevorzugt bezogen auf das Gesamtgewicht des Stoffgemischs (SG).

In einer bevorzugten Ausführungsform enthält das Stoffgemisch (SG) außerdem im Bereich von 15 bis 70 Gew.-% Wasser, bevorzugt im Bereich von 20 bis 60 Gew.-% und insbesondere bevorzugt im Bereich von 22,5 bis 55 Gew.-% Wasser, bezogen auf die Summe der Gew.-% von Adipinsäure, Glutarsäure, Bernsteinsäure, Wasser und Salpetersäure, bevorzugt bezogen auf das Gesamtgewicht des Stoffgemischs (SG). Außerdem enthält das Stoffgemisch (SG) in der bevorzugten Ausführungsform üblicherweise im Bereich von 15 bis 50 Gew.-%, bevorzugt im Bereich von 20 bis 45 Gew.-% und insbesondere bevorzugt im Bereich von 25 bis 38 Gew.-% Salpetersäure, bezogen auf die Summe der Gew.-% von Adipinsäure, Glutarsäure, Bernsteinsäure, Wasser und Salpetersäure, bevorzugt bezogen auf das Gesamtgewicht des Stoffgemischs (SG).

Die Gewichtsprozente der im Stoffgemisch (SG) enthaltenen Stoffe addieren sich üblicherweise zu 100 %.

Das Verhältnis der Gewichtsprozente von Adipinsäure zu der Summe der Gewichtsprozente von Glutarsäure und Bernsteinsäure in dem Stoffgemisch (SG) liegt beispielsweise im Bereich von 5 : 35 bis 30 : 2, bevorzugt im Bereich von 10 : 27 bis 25 : 3 und insbesondere bevorzugt im Bereich von 14 : 20 bis 19 : 6.

Die Bestimmungen der Konzentration der Adipinsäure erfolgt NIR-spektroskopisch. Unter "NIR-spektroskopisch" wird im Rahmen der vorliegenden Erfindung verstanden, dass ein Messinstrument (M) ein NIR-Spektrum (Nah-Infrarot-Spektrum) misst. Als Messinstrument (M) wird üblicherweise ein NIR-Spektrometer eingesetzt. NIR-Spektrometer sind dem Fachmann als solche bekannt.

Als NIR-Spektrometer bevorzugt ist ein FT-NIR-Spektrometer (Fourier-Transformations-Nah-Infrarot-Spektrometer), welches in Transmission misst.

Derartige Spektrometer sind dem Fachmann bekannt.

Das Messinstrument (M) misst beispielsweise ein NIR-Spektrum im Bereich von 12500 bis 4000 cm⁻¹, bevorzugt im Bereich von 10000 bis 5000 cm⁻¹ und besonders bevorzugt im Bereich von 7000 bis 5400 cm⁻¹

Gegenstand der vorliegenden Erfindung ist somit auch ein Verfahren, bei dem das von dem Messinstrument (M) aufgenommene NIR-Spektrum im Bereich von 12500 bis 4000 cm⁻¹ liegt.

Das mit dem Messinstrument (M) gemessene NIR-Spektrum wird dann beispielsweise mit einem chemometrischen Kalibrationsmodell, bevorzugt mit einem Partial-Least-Squares-Verfahren (PLS-Verfahren) ausgewertet und die Konzentration von Adipinsäure in dem Stoffgemisch (SG) sowie gegebenenfalls der weiteren Stoffe in dem Stoffgemisch (SG) bestimmt. Verfahren hierzu sind dem Fachmann als solche bekannt und beispielsweise in Jörg-Peter Conzen "Multivariate Kalibration", 2001, ISBN 3-929431-13-0, in Richard Kramer "Chemometric Techniques for Quantitative Analysis", 1998, ISBN 0-8247-0198-4 und in C. Miller "Chemometrics for on-line spectroscopy applications - theory and practice", Journal of chemometrics 2000, 14, 513-528 beschrieben.

Die Auswertung erfolgt beispielsweise in einem Bereich von 12500 bis 4000 cm⁻¹, bevorzugt in einem Bereich von 9500 bis 5000 cm⁻¹, besonders bevorzugt in einem Bereich von 9400 bis 5400 cm⁻¹ und insbesondere bevorzugt in einem Bereich von 6100 bis 5550 cm⁻¹.

Bevorzugt umfasst die NIR-spektroskopische Bestimmung der Konzentration der Adipinsäure, bevorzugt der Konzentration der Adipinsäure, der Glutarsäure und der Bernsteinsäure durch ein Messinstrument (M) die folgenden Schritte:
a) Aufnahme eines NIR-Spektrums des Stoffgemischs (SG) mit dem Messinstrument (M),
b) Eingabe des in Schritt a) aufgenommenen NIR-Spektrums in ein chemometrisches Kalibrationsmodell und
c) Auswertung des NIR-Spektrums mit dem chemometrischen Kalibrationsmodell unter Erhalt der Konzentration der Adipinsäure, bevorzugt unter Erhalt der Konzentration der Adipinsäure, der Konzentration der Glutarsäure und der Konzentration der Bernsteinsäure.

Gegenstand der vorliegenden Erfindung ist somit auch ein Verfahren, bei dem die NIR-spektroskopische Bestimmung der Konzentration der Adipinsäure durch ein Messinstrument (M) erfolgt, wobei die Bestimmung folgende Schritte umfasst:
a) Aufnahme eines NIR-Spektrums des Stoffgemischs (SG) mit dem Messinstrument (M),
b) Eingabe des in Schritt a) aufgenommenen NIR-Spektrums in ein chemometrisches Kalibrationsmodell und
c) Auswertung des NIR-Spektrums mit dem chemometrischen Kalibrationsmodell unter Erhalt der Konzentration der Adipinsäure

Für das Messinstrument (M) in Schritt a) sowie für das chemometrische Kalibrationsmodell in Schritt b) und die Auswertung des NIR-Spektrums mit dem chemometrischen Kalibrationsmodell in Schritt c) gelten die zuvor beschriebenen Ausführungen und Bevorzugungen.

Erfindungsgemäß außerdem bevorzugt wird bei dem Verfahren, außer der Konzentration der Adipinsäure, zusätzlich die Konzentration der Glutarsäure und die Konzentration der Bernsteinsäure in dem Stoffgemisch (SG) NIR-spektroskopisch bestimmt.

Gegenstand der vorliegenden Erfindung ist somit auch ein Verfahren, bei dem außerdem die Konzentration der Glutarsäure und die Konzentration der Bernsteinsäure in dem Stoffgemisch (SG) NIR-spektroskopisch bestimmt werden

Bevorzugt wird das Stoffgemisch (SG) in einem Verfahren zur Herstellung von Adipinsäure erhalten.

Gegenstand der vorliegenden Erfindung ist somit auch ein Verfahren, bei dem das Stoffgemisch (SG) in einem Verfahren zur Herstellung von Adipinsäure erhalten wird.

Verfahren zur Herstellung von Adipinsäure sind dem Fachmann als solche bekannt und beispielsweise in Ullmann's Encyclopedia of Industrial Chemistry, 6. Auflage, Band 1, Seiten 453 bis 463 (2003), Wiley-VCH*,* beschrieben.

Erfindungsgemäß außerdem bevorzugt wird das Stoffgemisch (SG) in einem Kreisstrom geführt.

Gegenstand der vorliegenden Erfindung ist somit auch ein Verfahren, bei dem das Stoffgemisch (SG) in einem Kreisstrom geführt wird.

Insbesondere bevorzugt wird das Stoffgemisch (SG) in einem Verfahren zur Herstellung von Adipinsäure erhalten, wobei das Stoffgemisch (SG) in einem Kreisstrom geführt wird.

Unter einem "Kreisstrom" wird im Rahmen der vorliegenden Erfindung eine Aneinanderreihung von Leitungen sowie gegebenenfalls Reaktoren und weiteren Vorrichtungen verstanden, die es ermöglichen, das Stoffgemisch (SG) in einem Kreis zu führen. Erfindungsgemäß bevorzugt verhält sich das Stoffgemisch (SG) in dem Kreisstrom wie in einem ideal gerührten Reaktor. Ideal gerührte Reaktoren sind dem Fachmann als solche bekannt. Beispielsweise ist die Konzentration eines in einem ideal gerührten Reaktor enthaltenen Stoffgemischs (SG) über den gesamten Reaktor im Wesentlichen konstant. Somit ist die Konzentration des Stoffgemischs (SG), das in einem Kreisstrom geführt wird, im Wesentlichen konstant. Dies bedeutet, dass sich die Konzentration der im Stoffgemisch (SG) enthaltenen Stoffe im Kreisstrom um maximal +/- 15 %, bevorzugt um maximal +/- 7 % und insbesondere bevorzugt um maximal +/-5 % ändert.

Vorzugsweise umfasst der Kreisstrom eine erste Leitung (1) zur Zufuhr eines Anolongemischs und mindestens eine Aufteilungsvorrichtung (V1) zur Aufteilung des Stoffgemischs (SG) in einen ersten Teil des Stoffgemischs (SG) und einen zweiten Teil des Stoffgemischs (SG), wobei der zweite Teil des Stoffgemischs (SG) aus dem Kreisstrom durch eine neunte Leitung (9) abgeführt wird. Die neunte Leitung (9) ist ebenfalls Teil des Kreisstroms.

Gegenstand der vorliegenden Erfindung ist somit auch ein Verfahren, bei dem der Kreisstrom eine erste Leitung (1) zur Zufuhr eines Anolongemischs und mindestens eine Aufteilungsvorrichtung (V1) zur Aufteilung des Stoffgemischs (SG) in einen ersten Teil des Stoffgemischs (SG) und einen zweiten Teil des Stoffgemischs (SG) umfasst, wobei der zweite Teil des Stoffgemischs (SG) aus dem Kreisstrom durch eine neunte Leitung (9) abgeführt wird.

Ein Anolongemisch ist dem Fachmann als solches bekannt. Unter einem Anolongemisch wird eine Mischung aus Cyclohexanol und Cyclohexanon verstanden.

Das Anolongemisch enthält üblicherweise im Bereich von 65 bis 95 Gew.-% Cyclohexanol und im Bereich von 5 bis 35 Gew.-% Cyclohexanon, bevorzugt im Bereich von 75 bis 90 Gew.-% Cyclohexanol und im Bereich von 10 bis 25 Gew.-% Cyclohexanon und besonders bevorzugt im Bereich von 80 bis 85 Gew.-% Cyclohexanol und im Bereich von 15 bis 20 Gew.-% Cyclohexanon, jeweils bezogen auf das Gesamtgewicht des Anolongemischs.

Verfahren zur Herstellung eines Anolongemischs sind dem Fachmann als solche bekannt. Üblicherweise wird das Anolongemisch hergestellt durch die Oxidation von Cyclohexan in Flüssigphase mit Luft.

Geeignete Aufteilungsvorrichtungen (V1) zur Aufteilung des Stoffgemischs (SG) in einem ersten Teil des Stoffgemischs (SG) und einem zweiten Teil des Stoffgemischs (SG) sind dem Fachmann als solche bekannt. Sie können beispielsweise Pumpen und Ventile umfassen.

Der erste Teil des Stoffgemischs (SG) enthält beispielsweise im Bereich von 60 bis 98 %, bevorzugt im Bereich von 65 bis 95 % und insbesondere bevorzugt im Bereich von 75 bis 90 % des Stoffgemischs (SG), bezogen auf die Gesamtmenge des Stoffgemischs (SG).

Der zweite Teil des Stoffgemischs (SG), der aus Kreisstrom durch die neunte Leitung (9) abgeführt wird, enthält üblicherweise im Bereich von 2 bis 40 %, bevorzugt im Bereich von 5 bis 35 % und insbesondere bevorzugt im Bereich von 10 bis 25 % des Stoffgemischs (SG), bezogen auf die Gesamtmenge des Stoffgemischs (SG).

Die neunte Leitung (9) kann den zweiten Teil des Stoffgemischs (SG) aus dem Kreisstrom, beispielsweise in einen Kristallisator (IV) abführen.

Im Rahmen der vorliegenden Erfindung wird unter einem Kristallisator (IV) nicht nur ein Kristallisator als solcher verstanden, sondern auch eine Kristallisationseinheit. Derartige Kristallisationseinheiten sind dem Fachmann als solche bekannt. Sie können beispielsweise Kristallisatoren, Voreindicker, Zentrifugen und Trockner umfassen.

Geeignete Kristallisatoren (IV) sind dem Fachmann als solche bekannt.

In dem Kristallisator (IV) kann dann zumindest ein Teil der in dem zweiten Teil des Stoffgemischs (SG) enthaltenen Adipinsäure durch Kristallisation von der Glutarsäure und der Bernsteinsäure sowie gegebenenfalls den anderen enthaltenen Stoffen, abgetrennt werden. Verfahren hierzu sind dem Fachmann bekannt und beispielsweise in Ullmann's Encyclopedia of Industrial Chemistry, 6. Auflage, Band 1, Seiten 453-463 (2003), Wiley-VCH*,* beschrieben.

In dem Kristallisator (IV) kann die Zusammensetzung insbesondere die Konzentration der Adipinsäure sowie gegebenenfalls die Konzentration der Glutarsäure und der Bernsteinsäure in den verschiedenen Produktströmen ebenfalls durch NIR-Spektroskopie bestimmt werden. Die Bestimmung kann durch ein Messinstrument, das im Bereich des Kristallisators (IV) angeordnet ist, bestimmt werden. Für das gegebenenfalls im Kristallisator (IV) enthaltene Messinstrument gelten die gleichen Ausführungen und Bevorzugungen wie für das Messinstrument (M) beschrieben entsprechend.

Bei der Kristallisation in dem Kristallisator (IV) wird neben der Adipinsäure eine Mutterlauge (ML) erhalten. Die Mutterlauge (ML) enthält üblicherweise Adipinsäure, Bernsteinsäure, Glutarsäure, Wasser und Salpetersäure.

Es versteht sich von selbst, dass die Mutterlauge (ML) weniger Adipinsäure enthält als das Stoffgemisch (SG).

Bevorzugt wird ein Teil der bei der Kristallisation in dem Kristallisator (IV) erhaltenen Mutterlauge (ML) über eine elfte Leitung (11) in den Kreisstrom rückgeführt. Verfahren hierzu sind dem Fachmann bekannt.

Der Kreisstrom umfasst bevorzugt ein Messinstrument (M), das ein NIR-Spektrum des Stoffgemischs (SG) aufnimmt.

Gegenstand der vorliegenden Erfindung ist somit auch ein Verfahren, bei dem der Kreisstrom ein Messinstrument (M), das ein NIR-Spektrum des Stoffgemischs (SG) aufnimmt, umfasst.

Besonders bevorzugt umfasst der Kreisstrom die folgenden Komponenten:
i) eine erste Leitung (1) zur Zufuhr eines Anolongemischs,
ii) eine zweite Leitung (2) zur Zufuhr eines Eduktstroms, der Salpetersäure enthält,
iii) einen ersten Reaktor (I), der eine Venturi-Düse umfasst zur Reaktion des durch die erste Leitung (1) zugeführten Anolongemischs mit der durch die zweite Leitung (2) zugeführten Salpetersäure,
iv) eine erste Trenneinheit (II) zur Abtrennung von Stickoxiden aus dem Stoffgemisch (SG),
v) eine zweite Trenneinheit (III) zur Abtrennung von Wasser aus dem Stoffgemisch (SG),
vi) eine Aufteilungsvorrichtung (V1) zur Aufteilung des Stoffgemischs (SG) in einen ersten Teil des Stoffgemischs (SG) und einen zweiten Teil des Stoffgemischs (SG).

Gegenstand der vorliegenden Erfindung ist somit auch ein Verfahren, bei dem der Kreisstrom die folgenden Komponenten umfasst:
i) eine erste Leitung (1) zur Zufuhr eines Anolongemischs,
ii) eine zweite Leitung (2) zur Zufuhr eines Eduktstroms, der Salpetersäure enthält,
iii) einen ersten Reaktor (I), der eine Venturidüse umfasst und in dem das durch die erste Leitung (1) zugeführte Anolongemisch mit der durch die zweite Leitung (2) zugeführten Salpetersäure reagiert,
iv) eine erste Trenneinheit (II) zur Abtrennung von Stickoxiden aus dem Stoffgemisch (SG),
v) eine zweite Trenneinheit (III) zur Abtrennung von Wasser aus dem Stoffgemisch (SG),
vi) eine Aufteilungsvorrichtung (V1) zur Aufteilung des Stoffgemischs (SG) in einen ersten Teil des Stoffgemischs (SG) und eines zweiten Teil des Stoffgemischs (SG).

Für die erste Leitung (1) zur Zufuhr eines Anolongemischs sowie für das Anolongemisch gelten die zuvor beschriebenen Ausführungen und Bevorzugungen entsprechend.

Für die Aufteilungsvorrichtung (V1) gelten ebenfalls die zuvor beschriebenen Ausführungen und Bevorzugungen entsprechend.

Als zweite Leitung (2) zur Zufuhr eines Eduktstroms, der Salpetersäure enthält, eignen sich sämtlich dem Fachmann bekannten Leitungen, die gegenüber Salpetersäure stabil sind. Der Eduktstrom, der über die zweite Leitung (2) zugeführt wird, enthält üblicherweise im Bereich von 20 bis 90 Gew.-%, bevorzugt im Bereich von 40 bis 70 Gew.-% und insbesondere bevorzugt im Bereich von 50 bis 70 Gew.-% Salpetersäure. Darüber hinaus enthält der Eduktstrom üblicherweise noch Wasser.

Im Allgemeinen enthält der Eduktstrom im Bereich von 10 bis 80 Gew.-%, bevorzugt im Bereich von 30 bis 60 Gew.-% und insbesondere bevorzugt im Bereich von 30 bis 50 Gew.-% Wasser, jeweils bezogen auf die Summe der Gewichtsprozente von Salpetersäure und Wasser in dem Eduktstrom, bevorzugt bezogen auf das Gesamtgewicht des Eduktstroms.

Üblicherweise addieren sich die Summe der Gewichtsprozente von Salpetersäure und Wasser im Eduktstrom zu 100 %.

Der Eduktstrom, der Salpetersäure enthält, kann nach allen dem Fachmann bekannten Methoden bereitgestellt werden.

In einer bevorzugten Ausführungsform wird zumindest ein Teil des Eduktstroms bereitgestellt, indem die in der ersten Trenneinheit (II) abgetrennten Stickoxide aufgearbeitet werden unter Erhalt einer Mischung von Salpetersäure und Wasser, die als Eduktstrom eingesetzt werden kann. Verfahren hierzu sind dem Fachmann bekannt.

Der Eduktstrom wird bevorzugt dem ersten Teil des Stoffgemischs (SG) durch die zweite Leitung (2) zugeführt, bevor das Anolongemisch durch die erste Leitung (1) zugeführt wird.

Der erste Reaktor (I) umfasst ein Mischorgan, in dem das Anolongemisch und das Stoffgemisch (SG) gemischt werden können, und/oder das Anolongemisch mit der Salpetersäure reagieren kann, beispielsweise einen T-Mischer, einen Y-Mischer oder eine Venturi-Düse, bevorzugt eine Venturi-Düse, in der das Anolongemisch mit der Salpetersäure reagieren kann. Als erster Reaktor (I) eignen sich alle dem Fachmann bekannten Reaktoren, in denen das durch die erste Leitung (1) zugeführte Anolongemisch mit der durch die zweite Leitung (2) zugeführten Salpetersäure reagieren kann und die zur Reaktion bei den üblichen Reaktionstemperaturen und Reaktionsdrücken geeignet sind. Geeignete erste Reaktoren (I) sind beispielsweise Rührkesselreaktoren, Rohrreaktoren oder Festbettreaktoren, die jeweils eine Venturi-Düse umfassen. Bevorzugt sind Rohrreaktoren, die eine Venturi-Düse umfassen.

Das Anolongemisch wird durch die erste Leitung (1) üblicherweise durch die Venturi-Düse in den ersten Reaktor (I) eingeleitet. Gleichzeitig wird durch die zweite Leitung (2) die Salpetersäure zugeführt. Vorzugsweise wird die Salpetersäure dem Stoffgemisch (SG) außerhalb des ersten Reaktors (I) durch die zweite Leitung (2) zugeführt. In der Venturi-Düse reagiert die Salpetersäure, die im Stoffgemisch (SG) enthalten ist, mit dem durch die erste Leitung (1) zugeführten Anolongemisch. Es besteht die Möglichkeit, dass diese Reaktion sowohl in der Venturi-Düse als auch in dem Rest des ersten Reaktors (I) stattfindet.

Die Temperatur des Stoffgemischs (SG) beim Einleiten des Anolongemischs durch die erste Leitung (1) liegt beispielsweise im Bereich von 30 bis 100 °C, bevorzugt im Bereich von 40 bis 90 °C und insbesondere bevorzugt im Bereich von 60 bis 80 °C.

Die Reaktion eines Anolongemischs mit Salpetersäure ist dem Fachmann als solche bekannt und beispielsweise in Ullmann's Encyclopedia Industrial Chemistry, 6. Auflage, Band 1, Seiten 453 bis 463 (2003), Wiley-VCH*,* beschrieben.

Die Reaktion kann in Gegenwart eines Katalysators stattfinden. Geeignete Katalysatoren sind dem Fachmann als solche bekannt. Beispielsweise eignen sich Vanadium-, Kupfer- oder Vanadium-Kupfer-Katalysatoren.

Der Katalysator kann beispielsweise als gelöstes Salz eingesetzt werden.

Dem Fachmann ist klar, dass das Stoffgemisch (SG) als weiteren Stoff den Katalysator enthalten kann, wenn das Stoffgemisch (SG) beispielsweise durch Reaktion eines Anolongemischs mit Salpetersäure in Gegenwart eines Katalysators erhalten wird.

Während der Reaktion bilden sich Adipinsäure, Glutarsäure, Bernsteinsäure, Wasser und Stickoxide.

Adipinsäure wird auch als 1,6-Hexandisäure bezeichnet, Glutarsäure ist auch bekannt unter dem Namen 1,5-Pentandisäure, Bernsteinsäure wird auch als 1,4-Butandisäure bezeichnet.

Darüber hinaus können noch weitere Mono- und Dicarbonsäuren gebildet werden. Eine weitere Mono- und Dicarbonsäure ist beispielsweise Essigsäure. Darüber hinaus können sich beispielsweise Kohlenmonoxid, Kohlendioxid und Distickstoffmonoxid bilden.

Bei Austritt aus dem ersten Reaktor (I) liegt die Temperatur des Stoffgemischs (SG) beispielsweise im Bereich von 45 bis 125 °C, bevorzugt im Bereich von 65 bis 105 °C und insbesondere bevorzugt im Bereich von 75 bis 95 °C.

Der Druck des Stoffgemischs (SG) bei Austritt aus dem ersten Reaktor (I) liegt üblicherweise im Bereich von 0,1 bis 10 bar, bevorzugt im Bereich von 0,5 bis 8 bar und besonders bevorzugt im Bereich von 1 bis 4 bar.

In der ersten Trenneinheit (II) werden Stickoxide sowie gegebenenfalls Kohlenmonoxid und Kohlendioxid aus dem Stoffgemisch (SG) abgetrennt.

Unter Stickoxiden werden Verbindungen von Stickstoff mit Sauerstoff verstanden. Zu diesen zählen beispielsweise Stickstoffmonoxid (NO), Stickstoffdioxid (NO₂) und Distickstoffmonoxid (N₂O).

Verfahren zur Abtrennung von Stickoxiden aus dem Stoffgemisch (SG) in der ersten Trenneinheit (II) sind dem Fachmann als solche bekannt.

Bevorzugt werden die Stickoxide abgetrennt, indem ein Gas in die erste Trenneinheit (II) eingeleitet wird. Das Gas enthält üblicherweise Sauerstoff. Ein geeignetes Gas ist beispielsweise Luft. Das Gas entfernt die Stickoxide aus der Trenneinheit (II). Verfahren hierzu sind dem Fachmann bekannt.

Als erste Trenneinheit (II) eignen sich alle dem Fachmann bekannten Trenneinheiten, die es ermöglichen, gelöstes Gas, insbesondere Stickoxide, aus dem Stoffgemisch (SG) abzutrennen.

Üblicherweise wird als erste Trenneinheit (II) eine Strippkolonne eingesetzt. Strippkolonnen sind dem Fachmann bekannt. Bevorzugt umfasst eine Strippkolonne eine vierte Leitung (4) zur Zufuhr des Gases und eine fünfte Leitung (5) zur Abfuhr der Stickoxide.

Verfahren zur Abtrennung von Wasser aus dem Stoffgemisch (SG) in der zweiten Trenneinheit (III) sind dem Fachmann als solche bekannt. Bevorzugt wird das Wasser bei erhöhter Temperatur und vermindertem Druck abgetrennt.

Der Druck am Kopf der zweiten Trenneinheit (III) liegt beispielsweise im Bereich von 0 bis 500 mbar, bevorzugt im Bereich von 50 bis 300 mbar und insbesondere bevorzugt im Bereich von 80 bis 200 mbar.

Die Temperatur am Kopf der zweiten Trenneinheit (III) liegt dann üblicherweise im Bereich von 0 bis 82 °C, bevorzugt im Bereich von 33 bis 69 °C und insbesondere bevorzugt im Bereich von 41 bis 61 °C.

Der abgetrennte Teil des Wassers wird aus der zweiten Trenneinheit (III) üblicherweise durch eine siebte Leitung (7) abgeführt.

Als zweite Trenneinheit (III) eignen sich alle dem Fachmann bekannten Trenneinheiten, die dazu geeignet sind, Wasser abzutrennen. Geeignete zweite Trenneinheiten (III) sind beispielsweise Verdampfer und Kolonnen.

Bevorzugt ist der erste Reaktor (I) des Kreisstroms über eine dritte Leitung (3) mit der ersten Trenneinheit (II) verbunden und die erste Trenneinheit (II) mit der zweiten Trenneinheit (III) durch eine sechste Leitung (6) verbunden. Die zweite Trenneinheit (III) ist durch eine achte Leitung (8) mit der Aufteilungsvorrichtung (V1) verbunden und die Aufteilungsvorrichtung (V1) ist über eine zehnte Leitung (10) mit dem ersten Reaktor (I) verbunden.

Die dritte Leitung (3), die sechste Leitung (6), die achte Leitung (8) und die zehnte Leitung (10) ist dann ebenfalls Teil des Kreisstroms.

Wie bereits beschrieben, wird das Stoffgemisch (SG) bevorzugt als Kreisstrom geführt. Wird das Stoffgemisch (SG) als Kreisstrom geführt, so bedeutet dies, dass die Zusammensetzung des Stoffgemischs (SG) innerhalb des Kreisstroms im Wesentlichen konstant bleibt.

"Im Wesentlichen konstant" bedeutet, dass sich die Gewichtsanteile der einzelnen Komponenten des Stoffgemischs (SG) um jeweils maximal +/- 15 %, bevorzugt um maximal +/- 7 % und insbesondere bevorzugt um maximal +/- 5 % ändern.

Somit ist die Zusammensetzung des Stoffgemischs (SG) nach dem ersten Reaktor (I) und die Zusammensetzung des Stoffgemischs (SG) nach der ersten Trenneinheit (II) im Wesentlichen konstant. Die Zusammensetzung des Stoffgemischs (SG) nach der zweiten Trenneinheit (III) und die Zusammensetzung des Stoffgemischs (SG) nach dem ersten Reaktor (I) sind ebenfalls im Wesentlichen konstant.

Umfasst der Kreisstrom ein Messinstrument (M), so kann das Messinstrument (M) an jeder beliebigen Stelle des Kreisstroms angeordnet sein. Bevorzugt ist das Messinstrument (M) im Bereich der neunten Leitung (9) angeordnet.

Gegenstand der vorliegenden Erfindung ist somit auch ein Verfahren, bei dem das Messinstrument (M) im Bereich der neunten Leitung (9) angeordnet ist.

Die Messung mit dem Messinstrument (M) kann offline, online oder inline erfolgen. Bevorzugt erfolgt die Messung online oder inline, insbesondere bevorzugt erfolgt die Messung online.

Bevorzugt nimmt das Messinstrument (M) also ein NIR-Spektrum des Stoffgemischs (SG) online auf.

Gegenstand der vorliegenden Erfindung ist somit auch ein Verfahren, bei dem das Messinstrument (M) das NIR-Spektrum des Stoffgemischs (SG) online aufnimmt.

Unter "offline" wird im Rahmen der vorliegenden Erfindung verstanden, dass manuell eine Probe des Stoffgemischs (SG) entnommen und gegebenenfalls aufbereitet wird. Anschließend wird die Messung mit dem Messinstrument (M) durchgeführt und durch Auswertung der Ergebnisse der Messung mit dem Messinstrument (M) die Konzentration von Adipinsäure sowie gegebenenfalls die Konzentration der Glutarsäure und die Konzentration der Bernsteinsäure in dem Stoffgemisch (SG) bestimmt. Eine offline-Messung erfolgt diskontinuierlich.

Unter "online" wird verstanden, dass das Stoffgemisch (SG) kontinuierlich mit dem Messinstrument (M) vermessen wird. Dann umfasst der Kreisstrom üblicherweise ein Messinstrument (M). Die Messung erfolgt über ein Bypassrohr, durch das der zu messende Teil des Stoffgemischs (SG) geleitet wird. Eine manuelle Probenentnahme entfällt im Gegensatz zur offline-Messung, allerdings ist das Hindurchleiten eines Teils des Stoffgemischs (SG) durch ein Bypassrohr notwendig.

Unter "inline" wird vorliegend verstanden, dass das Stoffgemisch (SG) kontinuierlich vermessen wird und dass die Messung direkt am Kreisstrom stattfindet. Ein Hindurchleiten des Stoffgemischs (SG) durch ein Bypassrohr entfällt somit.

Verfahren zur Durchführung von offline-, inline- und online-Messungen sind dem Fachmann als solche bekannt.

Die Position des Messinstruments (M) ist abhängig davon, ob die Messung offline, online oder inline erfolgt.

Erfolgt die Messung offline, kann das Messinstrument (M) an einer beliebigen Position angeordnet sein. Erfolgt die Messung online oder inline, so ist das Messinstrument (M) bevorzugt im Bereich der achten Leitung (8) und/oder im Bereich der neunten Leitung (9) und/oder im Bereich der zehnten Leitung (10) angeordnet. Besonders bevorzugt ist das Messinstrument (M) im Bereich der neunten Leitung (9) angeordnet.

Es versteht sich von selbst, dass das Messinstrument (M), wenn die Messung online oder inline erfolgt, so angeordnet ist, dass die Messung im Falle der online-Messung über ein Bypassrohr im Bereich der achten Leitung (8) und/oder neunten Leitung (9) und/oder der zehnten Leitung (10), bevorzugt im Bereich der neunten Leitung (9), erfolgt. Im Falle der inline-Messung erfolgt die Messung durch die achte Leitung (8) und/oder die neunte Leitung (9) und/oder die zehnte Leitung (10), bevorzugt durch die neunte Leitung (9).

In Abhängigkeit von der mit dem Messinstrument (M) bestimmten Konzentration der Adipinsäure in dem Stoffgemisch (SG) wird vorzugsweise die Zufuhr des Anolongemischs durch die erste Leitung (1) und/oder die Aufteilung des Stoffgemischs (SG) durch die Aufteilungsvorrichtung (V1) in einen ersten Teil des Stoffgemischs (SG) und einen zweiten Teil des Stoffgemischs (SG) gesteuert.

Gegenstand der vorliegenden Erfindung ist somit auch ein Verfahren, bei dem in Abhängigkeit von der mit dem Messinstrument (M) bestimmten Konzentration der Adipinsäure in dem Stoffgemisch (SG) die Zufuhr des Anolongemischs durch die erste Leitung (1) und/oder die Aufteilung des Stoffgemischs (SG) durch die Aufteilungsvorrichtung (V1) gesteuert wird.

In Abhängigkeit von der mit dem Messinstrument (M) bestimmten Konzentration der Adipinsäure in dem Stoffgemisch (SG) wird außerdem bevorzugt die Zufuhr des Anolongemischs durch die erste Leitung (1) und/oder die Aufteilung des Stoffgemischs (SG) durch die Aufteilungsvorrichtung (V1) in einen ersten Teil des Stoffgemischs (SG) und einem zweiten Teil des Stoffgemischs (SG) geregelt.

Gegenstand der vorliegenden Erfindung ist somit auch ein Verfahren, bei dem in Abhängigkeit von der mit dem Messinstrument (M) bestimmten Konzentration der Adipinsäure in dem Stoffgemisch (SG) die Zufuhr des Anolongemischs durch die erste Leitung (1) und/oder die Aufteilung des Stoffgemischs (SG) durch die Aufteilungsvorrichtung (V1) geregelt wird.
"steuern" und "regeln" ist dem Fachmann als solches bekannt.

Beim Steuern beeinflusst eine Eingangsgröße eine Ausgangsgröße. Bei der Steuerung wirkt die Ausgangsgröße allerdings nicht auf die Eingangsgröße zurück. Die Eingangsgröße wird also nicht durch die Ausgangsgröße beeinflusst. Es handelt sich also um einen offenen Regelkreis.

Im Gegensatz dazu wird bei der Regelung ein zu regelnder Wert gemessen und mit einem Soll-Wert verglichen. Bei Abweichungen des zu regelnden Wertes vom Soll, wird eine Stellgröße entsprechend angepasst. Eine gemessene Eingangsgröße beeinflusst daher also eine Ausgangsgröße und die Ausgangsgröße wirkt auf die Eingangsgröße zurück. Somit handelt es sich um einen geschlossenen Regelkreis.

In einer bevorzugten Ausführungsform wird die Zufuhr des Anolongemischs durch die erste Leitung (1) und/oder die Aufteilung des Stoffgemischs (SG) durch die Aufteilungsvorrichtung (V1) in den ersten Teil des Stoffgemischs (SG) und dem zweiten Teil des Stoffgemischs (SG) so gesteuert oder geregelt, dass die Konzentration der Adipinsäure im Stoffgemisch (SG) im Bereich von 5 bis 30 Gew.-%, bevorzugt im Bereich von 10 bis 25 Gew.-% und insbesondere bevorzugt im Bereich von 14 bis 19,5 Gew.-% liegt, bezogen auf das Gesamtgewicht des Stoffgemischs (SG).

Gegenstand der vorliegenden Erfindung ist somit auch ein Verfahren, bei dem die Zufuhr des Anolongemischs durch die erste Leitung (1) und/oder die Aufteilung des Stoffgemischs (SG) durch die Aufteilungsvorrichtung (V1) so gesteuert oder geregelt wird, dass die Konzentration der Adipinsäure im Stoffgemisch (SG) im Bereich von 5 bis 30 Gew.-% liegt, bezogen auf das Gesamtgewicht des Stoffgemischs (SG).

### Bezugszeichenliste:

- I: erster Reaktor
- II: erste Trenneinheit
- III: zweite Trenneinheit
- IV: Kristallisator
- V1: Aufteilungsvorrichtung
- 1: erste Leitung zur Zuführung eines Anolongemischs
- 2: zweite Leitung zur Zuführung eines Eduktstroms, der Salpetersäure enthält
- 3: dritte Leitung
- 4: vierte Leitung zur Einleitung eines Gases
- 5: fünfte Leitung zum Abführen von Stickoxiden
- 6: sechste Leitung
- 7: siebte Leitung zum Abführen von Wasser
- 8: achte Leitung
- 9: neunte Leitung zum Abführen eines zweiten Teils des Stoffgemischs (SG)
- 10: zehnte Leitung
- 11: elfte Leitung zur teilweisen Überführung einer Mutterlauge (ML)
- 12: zwölfte Leitung zum Abführen von Adipinsäure in kristalliner Form
- 13: dreizehnte Leitung zum teilweisen Abführen einer Mutterlauge (ML)

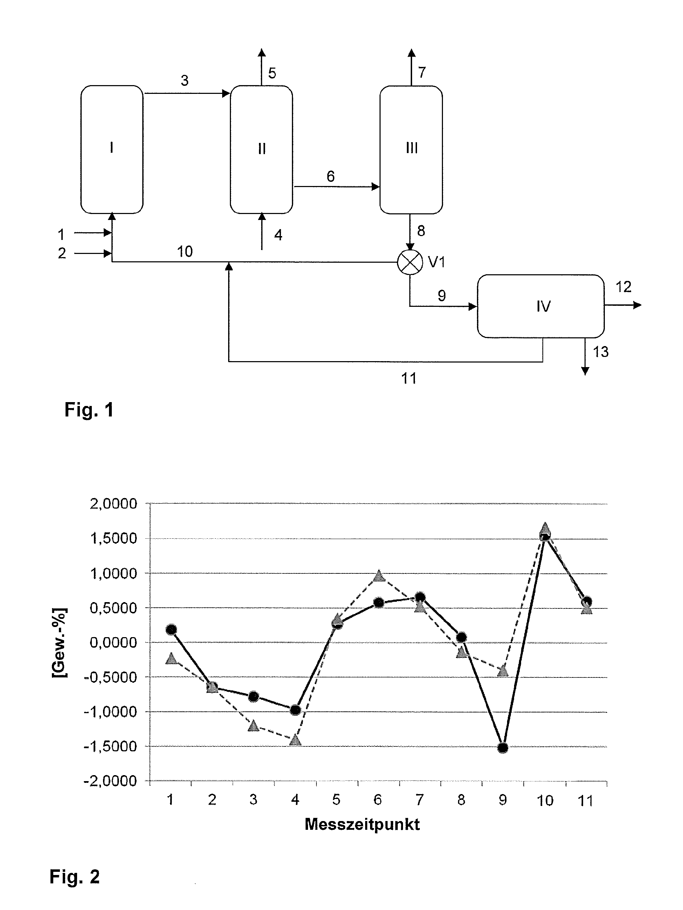

Figur 1 zeigt eine bevorzugte Ausführungsform des erfindungsgemäßen Verfahrens. Das Stoffgemisch (SG) wird in einem Verfahren zur Herstellung von Adipinsäure erhalten und in einem Kreisstrom geführt. In der in Figur 1 gezeigten Ausführungsform umfasst der Kreisstrom, in dem das Stoffgemisch (SG) geführt wird, einen ersten Reaktor I, eine erste Trenneinheit II, eine zweite Trenneinheit III sowie eine Aufteilungsvorrichtung V1. Zudem umfasst der Kreisstrom eine dritte Leitung 3, eine sechste Leitung 6, eine achte Leitung 8, eine neunte Leitung 9 zum Abführen eines zweiten Teils des Stoffgemischs (SG) und eine zehnte Leitung 10, die eine erste Leitung 1 zur Zufuhr eines Anolongemischs und eine zweite Leitung 2 zur Zufuhr eines Eduktstroms, der Salpetersäure enthält, umfasst.

Dem Stoffgemisch (SG) in der zehnten Leitung 10 wird durch die zweite Leitung 2 ein Eduktstrom, der Salpetersäure enthält, zugeführt. Anschließend wird dem Stoffgemisch (SG) durch eine erste Leitung 1 ein Anolongemisch zugeführt. Das Anolongemisch wird direkt in die Venturi-Düse, die Teil des ersten Reaktors I ist, zugeführt. Die Venturi-Düse ist in Figur 1 nicht eingezeichnet. In dem ersten Reaktor I reagiert die Salpetersäure mit dem Anolongemisch. Das Stoffgemisch (SG) wird dann über die dritte Leitung 3 in die erste Trenneinheit II überführt, in der Stickoxide aus dem Stoffgemisch (SG) entfernt werden. Die Entfernung der Stickoxide geschieht durch das Einleiten eines Gases durch die vierte Leitung 4 und das Abführen der Stickoxide durch die fünfte Leitung 5. Anschließend wird das Stoffgemisch (SG) durch die sechste Leitung 6 aus der ersten Trenneinheit II in die zweite Trenneinheit III überführt. In dieser wird über die siebte Leitung 7 Wasser aus dem Stoffgemisch (SG) abgetrennt. Die achte Leitung 8 überführt das Stoffgemisch (SG) in die Aufteilungsvorrichtung V1, welche einen zweiten Teil des Stoffgemischs (SG) durch eine neunte Leitung 9 in den Kristallisator IV überführt. Ein erster Teil des Stoffgemischs (SG) wird über die zehnte Leitung 10 in den ersten Reaktor I rückgeführt.

In dem Kristallisator IV wird die in dem Stoffgemisch (SG) enthaltene Adipinsäure zumindest teilweise durch Kristallisation abgetrennt. Dabei werden Adipinsäure in kristalliner Form und die Mutterlauge (ML) erhalten. Die Adipinsäure in kristalliner Form wird aus dem Kristallisator IV durch eine zwölfte Leitung 12 abgeführt. Die Mutterlauge (ML) wird von dem Kristallisator IV teilweise über die elfte Leitung 11 in die zehnte Leitung 10 und damit in den Kreisstrom rückgeführt. Die Mutterlauge (ML) wird außerdem teilweise über eine dreizehnte Leitung 13 aus dem Kristallisator IV abgeführt und damit nicht in den Kreisstrom rückgeführt.

In einer weiteren bevorzugten Ausführungsform wird dem Stoffgemisch (SG) in der zehnten Leitung 10 durch die zweite Leitung 2 ein Eduktstrom, der Salpetersäure enthält, zugeführt, anschließend wird die Mutterlauge (ML) teilweise über die elfte Leitung 11 in die zehnte Leitung 10 rückgeführt und schließlich dem Stoffgemisch (SG) durch die erste Leitung 1 das Anolongemisch zugeführt.

Im Bereich der achten Leitung 8 und/oder im Bereich der neunten Leitung 9 und/oder im Bereich der zehnten Leitung 10, bevorzugt im Bereich der neunten Leitung 9, ist ein Messinstrument (M) angeordnet (in Figur 1 nicht gezeigt). Das Messinstrument (M) misst ein NIR-Spektrum, anhand dessen die Konzentration der Adipinsäure sowie gegebenenfalls die Konzentration der Glutarsäure und die Konzentration der Bernsteinsäure in dem Stoffgemisch (SG) bestimmt werden kann. Es ist außerdem möglich, dass auch die Konzentration der Salpetersäure sowie gegebenenfalls die des Katalaysators, wie beispielsweise Kupfer, bestimmt wird, ausgehend von dem mit dem Messinstrument (M) gemessenen NIR-Spektrum. Ausgehend insbesondere von der bestimmten Konzentration der Adipinsäure wird die dem ersten Reaktor I zugeführte Menge des Anolongemischs und/oder die Aufteilungsvorrichtung V1 gesteuert oder geregelt.

Nachfolgend wir die vorliegende Erfindung durch Beispiele näher erläutert, ohne sie hierauf zu beschränken.

### Beispiele

### Beispiel 1

Es wurden zu bestimmten Zeitpunkten NIR-Spektren von einem Stoffgemisch (SG), das in einem wie in Figur 1 gezeigten Kreisstrom geführt und in einem Verfahren zur Herstellung von Adipinsäure erhalten wird, gemessen. Die Messung erfolgte im Bereich der neunten Leitung (9) durch ein Bypassrohr mit einem im Bereich der neunten Leitung (9) angeordneten NIR-Spektrometer als Messinstrument (M). Die NIR-Spektren wurden anschließend in ein chemometrisches Kalibrationsmodell eingegeben und mit dem chemometrischen Kalibrationsmodell ausgewertet. Dabei wurde die Konzentration von Adipinsäure, Glutarsäure und Bernsteinsäure in dem Stoffgemisch (SG) bestimmt. Die Dauer, um die NIR-Spektren zu messen und durch das chemometrische Kalibrationsmodell die Konzentration zu bestimmen, liegt etwa im Bereich von 2 bis 5 Minuten.

### Vergleichsbeispiel 2

Zu den gleichen Zeitpunkten (zeitgleich) wie in Beispiel 1 wurden Proben des Stoffgemischs (SG) aus dem Kreisstrom entnommen, um die Konzentration der verschiedenen im Stoffgemisch enthaltenen Komponenten nasschemisch zu bestimmen. Nach Entnahme der Probe wurde die Probe zunächst im Labor auf etwa 80 °C erhitzt, um ein vollständig gelöstes Stoffgemisch (SG) zu erhalten. Um die Dicarbonsäuren, Adipinsäure, Glutarsäure und Bernsteinsäure, zu bestimmen, wurde die Probe durch HPLC (high performance liquid chromatography; Hochleistungsflüssigchromatographie) gemessen. Die Zeit zwischen Probenentnahme und Erhalt der Konzentrationen liegt etwa bei 36 Minuten.

Es wurde der Mittelwert der Konzentration der jeweiligen Dicarbonsäure aller Messungen bestimmt.

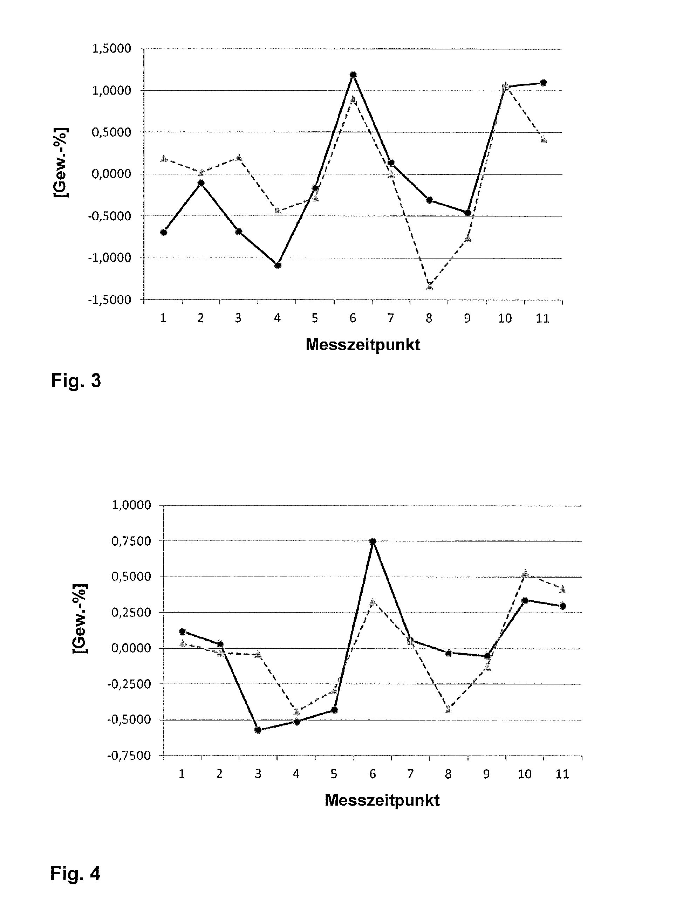

Die bei den einzelnen Messungen bestimmten Konzentrationen sind in Tabelle 1 als absolute Abweichungen von diesem Mittelwert MW angegeben. Zur besseren Übersichtlichkeit sind außerdem die absoluten Abweichungen vom Mittelwert MW in Abhängigkeit vom Zeitpunkt der Entnahme der Proben des Stoffgemischs (SG) für Adipinsäure in Figur 2, für Glutarsäure in Figur 3 und für Bernsteinsäure in Figur 4 eingezeichnet. In den Figuren 2, 3 und 4 ist auf der y-Achse jeweils die absolute Abweichung vom Mittelwert MW der Konzentration der Dicarbonsäure im Stoffgemisch (SG) (in Figur 2 die der Adipinsäure, in Figur 3 die der Glutarsäure und in Figur 4 die der Bernsteinsäure) in Gew.-% angegeben. Die x-Achse gibt jeweils den Messzeitpunkt an, bei dem ein NIR-Spektrum des Stoffgemischs (SG) aufgenommen worden ist (Beispiel 1) und bei dem die Probe des Stoffgemischs (SG) dem Kreisstrom entnommen worden ist (Vergleichsbeispiel 2), um die Konzentration der Dicarbonsäure zu bestimmen. Die mittels NIR-Spektroskopie bestimmten absoluten Abweichungen vom Mittelwert MW der Konzentration sind in den Figuren 2, 3 und 4 jeweils als Kreise eingezeichnet, die durch nasschemische Bestimmungsmethoden ermittelten absoluten Abweichungen vom Mittelwert MW der Konzentration jeweils als Dreiecke.

Anhand der Tabelle 1 und den Figuren 2, 3 und 4 ist zu erkennen, dass mit dem erfindungsgemäßen Verfahren nahezu identische absolute Abweichungen vom Mittelwert MW und damit auch nahezu identische Konzentrationen für die verschiedenen Dicarbonsäuren im Stoffgemisch (SG) erhalten werden wie mit den im Stand der Technik eingesetzten nasschemischen Bestimmungsmethoden. Somit ist das erfindungsgemäße Verfahren ähnlich genau wie die im Stand der Technik beschriebenen Verfahren. Allerdings ist der apparative Aufbau deutlich geringer und die Zeit, die benötigt wird, um die Konzentration der verschiedenen Dicarbonsäuren zu bestimmen, ist deutlich kürzer als mit den im Stand der Technik beschriebenen Verfahren.

Zudem ist die automatisierte Bestimmung der Konzentrationen in der Durchführung weniger fehleranfällig.

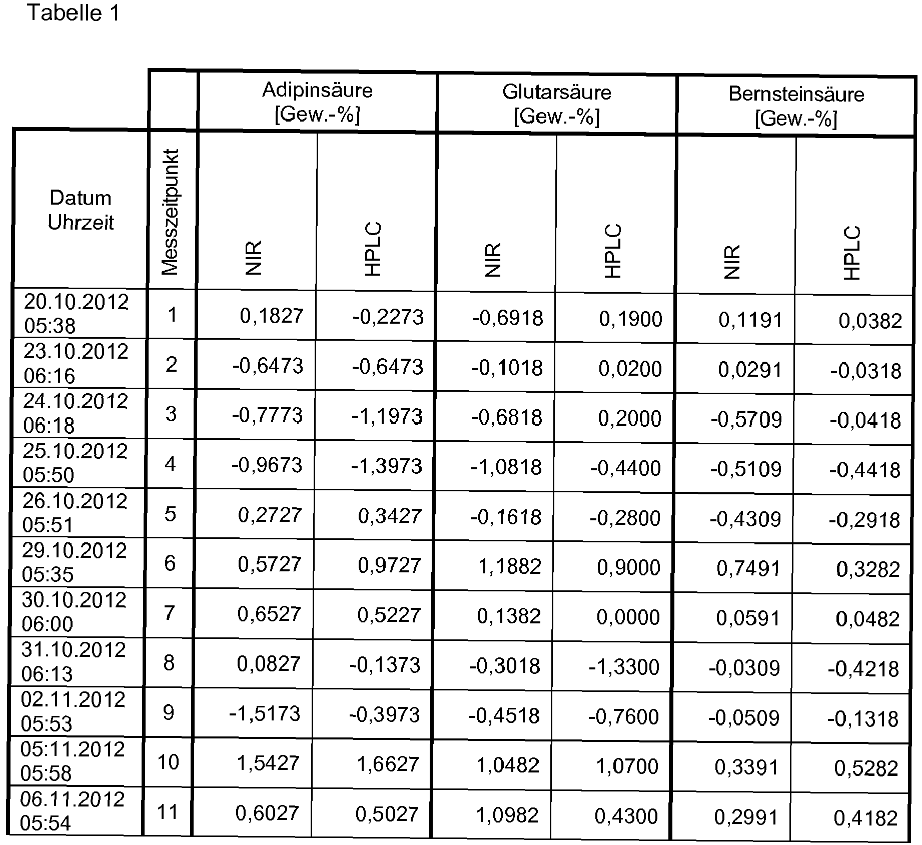

## Patentansprüche

1. Verfahren zur Bestimmung der Konzentration von Adipinsäure in einem Stoffgemisch (SG), das Adipinsäure, Glutarsäure und Bernsteinsäure enthält, **dadurch gekennzeichnet, dass** die Bestimmung der Konzentration der Adipinsäure NIR-spektroskopisch erfolgt.

2. Verfahren gemäß Anspruch 1, **dadurch gekennzeichnet, dass** außerdem die Konzentration der Glutarsäure und die Konzentration der Bernsteinsäure in dem Stoffgemisch (SG) NIR-spektroskopisch bestimmt werden.

3. Verfahren gemäß Anspruch 1 oder 2, **dadurch gekennzeichnet, dass** die NIR-spektroskopische Bestimmung der Konzentration der Adipinsäure durch ein Messinstrument (M) erfolgt, wobei die Bestimmung folgende Schritte umfasst:
a) Aufnahme eines NIR-Spektrums des Stoffgemischs (SG) mit dem Messinstrument (M),
b) Eingabe des in Schritt a) aufgenommenen NIR-Spektrums in ein chemometrisches Kalibrationsmodell und
c) Auswertung des NIR-Spektrums mit dem chemometrischen Kalibrationsmodell unter Erhalt der Konzentration der Adipinsäure.

4. Verfahren gemäß einem der Ansprüche 1 bis 3, **dadurch gekennzeichnet, dass** das Stoffgemisch (SG) in einem Verfahren zur Herstellung von Adipinsäure erhalten wird.

5. Verfahren gemäß einem der Ansprüche 1 bis 4, **dadurch gekennzeichnet, dass** das Stoffgemisch (SG) in einem Kreisstrom geführt wird.

6. Verfahren gemäß Anspruch 5, **dadurch gekennzeichnet, dass** der Kreisstrom eine erste Leitung (1) zur Zufuhr eines Anolongemischs und mindestens eine Aufteilungsvorrichtung (V1) zur Aufteilung des Stoffgemischs (SG) in einen ersten Teil des Stoffgemischs (SG) und einen zweiten Teil des Stoffgemischs (SG) umfasst, wobei der zweite Teil des Stoffgemischs (SG) aus dem Kreisstrom durch eine neunte Leitung (9) abgeführt wird.

7. Verfahren gemäß Anspruch 5 oder 6, **dadurch gekennzeichnet, dass** der Kreisstrom ein Messinstrument (M), das ein NIR-Spektrum des Stoffgemischs (SG) aufnimmt, umfasst.

8. Verfahren gemäß Anspruch 7, **dadurch gekennzeichnet, dass** das Messinstrument (M) im Bereich der neunten Leitung (9) angeordnet ist.

9. Verfahren gemäß einem der Ansprüche 6 bis 8, **dadurch gekennzeichnet, dass** in Abhängigkeit von der mit dem Messinstrument (M) bestimmten Konzentration der Adipinsäure in dem Stoffgemisch (SG) die Zufuhr des Anolongemischs durch die erste Leitung (1) und/oder die Aufteilung des Stoffgemischs (SG) durch die Aufteilungsvorrichtung (V1) gesteuert wird.

10. Verfahren gemäß einem der Ansprüche 6 bis 8, **dadurch gekennzeichnet, dass** in Abhängigkeit von der mit dem Messinstrument (M) bestimmten Konzentration der Adipinsäure in dem Stoffgemisch (SG) die Zufuhr des Anolongemischs durch die erste Leitung (1) und/oder die Aufteilung des Stoffgemischs (SG) durch die Aufteilungsvorrichtung (V1) geregelt wird.

11. Verfahren gemäß Anspruch 9 oder 10, **dadurch gekennzeichnet, dass** die Zufuhr des Anolongemischs durch die erste Leitung (1) und/oder die Aufteilung des Stoffgemischs (SG) durch die Aufteilungsvorrichtung (V1) so gesteuert oder geregelt wird, dass die Konzentration der Adipinsäure im Stoffgemisch (SG) im Bereich von 5 bis 30 Gew.-% liegt, bezogen auf das Gesamtgewicht des Stoffgemischs (SG).

12. Verfahren gemäß einem der Ansprüche 7 bis 11, **dadurch gekennzeichnet, dass** das Messinstrument (M) das NIR-Spektrum des Stoffgemischs (SG) online aufnimmt.

13. Verfahren gemäß einem der Ansprüche 7 bis 12, **dadurch gekennzeichnet, dass** das von dem Messinstrument (M) aufgenommene NIR-Spektrum im Bereich von 12500 bis 4000 cm⁻¹ liegt.

14. Verfahren gemäß einem der Ansprüche 5 bis 13, **dadurch gekennzeichnet, dass** der Kreisstrom die folgenden Komponenten umfasst:
i) eine erste Leitung (1) zur Zufuhr eines Anolongemischs,
ii) eine zweite Leitung (2) zur Zufuhr eines Eduktstroms, der Salpetersäure enthält,
iii) einen ersten Reaktor (I), der eine Venturidüse umfasst und in dem das durch die erste Leitung (1) zugeführte Anolongemisch mit der durch die zweite Leitung (2) zugeführten Salpetersäure reagiert,
iv) eine erste Trenneinheit (II) zur Abtrennung von Stickoxiden aus dem Stoffgemisch (SG),
v) eine zweite Trenneinheit (III) zur Abtrennung von Wasser aus dem Stoffgemisch (SG),
vi) eine Aufteilungsvorrichtung (V1) zur Aufteilung des Stoffgemischs (SG) in einen ersten Teil des Stoffgemischs (SG) und eines zweiten Teil des Stoffgemischs (SG).
